# EUROPÄISCHE PATENTANMELDUNG

(11) **EP 4 650 640 A1**
(43) Veröffentlichungstag der Anmeldung: **19.11.2025**
(21) Anmeldenummer: 24176379.6
(22) Anmeldetag: 16.05.2024
(51) Int. Cl.: F16L 25/00, F16L 33/00, F16L 41/02, F16L 41/03, F16L 43/00

(54) **VERBINDUNGSMUFFE FÜR WELLROHRE**

(71) Anmelder: SOMA GmbH & Co. KG, 72359 Dotternhausen (DE)
(72) Erfinder: Sommer, Frank, 72336 Balingen (DE); Massold, Andreas, 72336 Balingen (DE)
(74) Vertreter: Witte, Weller & Partner Patentanwälte mbB

(57) **Zusammenfassung**

Zur Verbindung von zwei Wellrohren schlägt die Erfindung eine rohrförmige Verbindungsmuffe (1) mit zwei identischen, verrasteten, halbzylinderschalenförmigen Halbmuffen (2) vor, die umlaufende, halbkreisförmige Rippen (6, 6') zum Eingriff in Wellentäler einer Wellung der Wellrohre an ihren Innenseiten aufweisen.

## Beschreibung

Die Erfindung betrifft eine Verbindungsmuffe zur Verbindung von zwei Wellrohren, wobei die Verbindungsmuffe eine Längsachse, ein erstes längsseitiges Ende, ein zweites längsseitiges Ende und einen Hohlraum im Innern der Verbindungsmuffe aufweist, wobei das erste längsseitige Ende und das zweite längsseitige Ende einen Abstand in Richtung der Längsachse voneinander aufweisen, sich der Hohlraum von dem ersten längsseitigen Ende zu dem zweiten längsseitigen Ende erstreckt und an den längsseitigen Enden zur Aufnahme jeweils eines Endes eines der zu verbindenden Wellrohre offen ist.

Unter einem Wellrohr wird typischerweise ein Rohr aus steifem Material mit wellenförmig wechselndem Durchmesser verstanden. Bereiche mit einem größeren Durchmesser sind dementsprechend Wellenberge eines solchen Wellrohres und Bereiche mit einem kleineren Durchmesser Wellentäler, wobei die Wellenberge und die Wellentäler in einer Längsrichtung des Wellrohrs abwechselnd hintereinander angeordnet sind und um das Wellrohr umlaufen. Es ist auch eine wendelförmige Wellung, das heißt eine mit einer Steigung um das Wellrohr umlaufende Welle möglich. Aufgrund der Wellung zeichnen sich Wellrohre durch eine gewisse Flexibilität aus, insbesondere sind sie biegbar, stauchbar und streckbar. Die Flexibilität ist unter anderem von der Geometrie der Wellung und dem Werkstoff des Wellrohres abhängig. Wellrohre aus Metall (Metallbälge oder Metallfaltenbälge) werden vornehmlich im Maschinen- und Gerätebau eingesetzt. Wellrohre aus Kunststoff oder Wellschläuche werden vorrangig für Elektroinstallationen und dabei etwa in der Automobilindustrie, dem Maschinen- und Anlagenbau, in Gebäuden, dem Schiffbau sowie der Medizintechnik zum Schutz und zur Bündelung elektrischer oder anderer Leitungen und auch zur Ausführung flexibler Verbindung zu entfernten Geräten benutzt.

Das Verbinden der Enden von zwei Wellrohren in axialer Richtung, also in Richtung ihrer Längsachsen, zu einem durchgehenden Rohr ist grundsätzlich bekannt. Dabei werden aus dem Stand der Technik bekannte Verbindungsmuffen eingesetzt, welche im Wesentlichen aus einem rohrförmigen Verbindungsstück bestehen. Die zu verbindenden Wellrohre werden dabei an ihren Enden, wobei sich die Enden der Wellrohre entlang der Längsausdehnung einer Verbindungsmuffe entweder unmittelbar, also aneinander stoßend, oder mit einem Abstand, gegenüberliegen, jeweils in der Verbindungsmuffe in axialer Richtung fixiert und so über die Verbindungsmuffe miteinander verbunden. Die aus dem Stand der Technik bekannten Verbindungsmuffen für Wellrohre sind entweder von komplexer einstückiger Gestalt, etwa mit integralen Klappscharnieren, oder von komplexer mehrteiliger Gestalt und in beiden Fällen aufwendig herzustellen.

Das chinesische Gebrauchsmuster CN 215 111 113 U offenbart einen Wellrohrverbinder mit zwei halbzylinderförmigen Halbschalen, die halbkreisförmige Rippen an ihren Innenseiten aufweisen, die in Wellentäler zweier Wellrohre greifen, wenn die Halbschalen zu dem Wellrohrverbinder zusammengesetzt und Enden der Wellrohre zu ihrer Verbindung in dem Wellrohrverbinder angeordnet sind. Die halbkreisförmigen Rippen, die in die Wellentäler der Wellrohre greifen, halten die Enden der Wellrohre zusammen. Um die beiden Halbschalen zusammen zu halten, sind zwei halbzylinderförmige Halbhülsen vorgesehen, die die Halbschalen umschließen und die miteinander verrastet werden.

Der vorliegenden Erfindung liegt die Aufgabe zugrunde, eine einfach herstellbare und handhabbare Verbindungsmuffe vorzuschlagen, die eine schnelle und funktionssichere Verbindung zweier Wellrohre miteinander ermöglicht.

Diese Aufgabe wird erfindungsgemäß durch einen Wellrohrverbinder mit den Merkmalen des Anspruchs 1 gelöst. Weitere vorteilhafte Ausgestaltungen sind den abhängigen Ansprüchen zu entnehmen.

Die erfindungsgemäße Verbindungsmuffe ist an einer Axialebene ihrer Längsachse als Teilungsebene in zwei identische, einander bezüglich der Teilungsebene spiegelsymmetrisch gegenüber angeordnete und miteinander verbundene Halbmuffen geteilt, deren Hohlseiten oder Innenseiten einander zugewandt sind. Wenn die beiden Halbmuffen wie vorgesehen zu der Verbindungsmuffe zusammengesetzt sind, umschließen sie beziehungsweise umschließt die Verbindungsmuffe einen Hohlraum, der sich in einer Längsrichtung der Verbindungsmuffe erstreckt und an zwei längsseitigen Enden der Verbindungsmuffe zum Einbringen von Enden zu verbindender Wellrohre offen ist. Die beiden Halbmuffen sind beispielsweise halbrohrförmig, insbesondere halbzylinderförmig und die Verbindungsmuffe ist beispielsweise rohrförmig, insbesondere zylinderrohrförmig.

Jede Halbmuffe weist mindestens ein Eingreifelement für jeweils eines der beiden zu verbindenden Wellrohre auf, das in dem Hohlraum nach innen steht und das zwischen zwei Wellen des Wellrohres greift, wenn das Wellrohr in dem Hohlraum angeordnet und so groß ist, dass seine Wellenberge innen an einem Umfang des Hohlraums anliegen. Durch den Eingriff in ein oder mehrere Wellentäler halten die Eingreifelemente Enden der Wellrohre in der Verbindungsmuffe. Vorzugsweise weist jede Halbmuffe mindestens ein solches Eingreifelement für jedes der beiden Wellrohre auf, das heißt jede Halbmuffe weist bei dieser Ausführung der Erfindung mindestens zwei Eingreifelemente an seiner Innenseite auf, die so angeordnet sind, dass mindestens ein Eingreifelement jeder Halbmuffe in ein Wellental eines Wellrohres und mindestens ein anderes Eingreifelement derselben Halbmuffe in ein Wellental des anderen Wellrohres greift. Möglich sind auch Ausführungen der Erfindung mit einem Eingreifelement, das in die Wellentäler beider Wellrohre greift.

Möglich ist auch die Verbindung von zwei Wellschläuchen.

Die Längsachsen der beiden Halbmuffen einer erfindungsgemäßen Verbindungsmuffe fallen im miteinander verbundenen Zustand mit der Längsachse der Verbindungsmuffe zusammen. Gleiches gilt für die ersten und zweite längsseitigen Enden der Halbmuffen einer Verbindungsmuffe und der Verbindungsmuffe selbst. Als längsseitiges Ende wird ein Ende einer Verbindungsmuffe oder einer Halbmuffe der Verbindungsmuffe in einer zu der Längsachse parallelen Längsrichtung verstanden. Die längsseitigen Enden können auch als Stirnenden der Verbindungsmuffe beziehungsweise der Halbmuffen aufgefasst werden. Der Abstand zwischen dem ersten längsseitigen Ende und dem zweiten längsseitigen Ende einer Verbindungsmuffe oder der Halbmuffen einer Verbindungsmuffe entlang der jeweiligen Längsachse entspricht der größten Längserstreckung der Verbindungsmuffe oder der Halbmuffen einer Verbindungsmuffe.

Der Hohlraum der erfindungsgemäßen Verbindungsmuffe ist zumindest in Aufnahmebereichen, die sich an die längsseitigen Enden der Verbindungsmuffe anschlie-βen, zur Aufnahme jeweils eines Wellrohres ausgebildet. Dies betrifft insbesondere eine an eine Querschnittsform und eine Querschnittgröße der beiden mittels der Verbindungsmuffe zur Verbindung vorgesehenen Wellrohre angepassten Querschnittgröße und Querschnittsform des Hohlraums der Verbindungsmuffe. Da Wellrohre typischerweise einen kreisrunden Querschnitt aufweisen, ist der Querschnitt des Hohlraums in den zur Aufnahme eines Wellrohres vorgesehenen Aufnahmebereichen der Verbindungsmuffe vorzugsweise ebenfalls kreisrund. Der Querschnitt oder der Durchmesser der Aufnahmebereiche der Verbindungsmuffe für die beiden Wellrohre ist insbesondere so groß wie oder geringfügig größer als ein Querschnitt oder Durchmesser der Wellrohre.

Außerhalb der Aufnahmebereiche am ersten längsseitigen Ende und am zweiten längsseitigen Ende einer Verbindungsmuffe, das heißt in einem Längsbereich der Verbindungsmuffe zwischen den beiden Aufnahmebereichen an ihren längsseitigen Enden kann der Hohlraum der Verbindungsmuffe identisch oder abweichend von den beiden Aufnahmebereichen ausgebildet sein. So kann der Hohlraum außerhalb der Aufnahmebereiche einen kleineren oder auch einen größeren Querschnitt oder Durchmesser als die zur Verbindung und damit zur Aufnahme in den Aufnahmebereichen vorgesehenen Wellrohre aufweisen. Durch einen kleineren Querschnitt oder Durchmesser des Hohlraums in der erfindungsgemäßen Verbindungsmuffe zwischen ihren Aufnahmebereichen ergibt sich ein innenseitig umlaufender Axialanschlag, welcher eine Einbringtiefe der Wellrohre von den längsseitigen Enden in die Verbindungsmuffe begrenzt.

Vorzugsweise sind die Eingreifelemente außerhalb einer Längsmitte, das heißt zwischen der Längsmitte und den längsseitigen Enden der Verbindungsmuffe angeordnet. Dadurch ist jedes Eingreifelement einem Wellrohr zugeordnet. Es können für ein Wellrohr auch mehrere Eingreifelemente vorgesehen sein, die alle identisch, zumindest teilweise oder auch allesamt unterschiedlich ausgebildet sein können. Die Eingreifelemente können dabei entlang der Längsachse axial beabstandet sein.

Möglich ist auch ein oder sind zwei oder mehr Eingreifelemente, die sich in einer Längsrichtung der Verbindungsmuffe insbesondere über die Längsmitte der Verbindungsmuffe hinweg erstrecken, wobei eine Eingreifelement in die Wellentäler von zwei mit der Verbindungsmuffe verbundenen Wellrohren greift.

Bei einer Ausgestaltungsvariante einer erfindungsgemäßen Verbindungsmuffe ist vorgesehen, dass das Eingreifelement eine nach innen in den Hohlraum stehende Erhebung aufweist, die sich insbesondere in einer Umfangsrichtung erstreckt. Das Eingreifelement ist beispielsweise eine umlaufende, halbkreisförmige Rippe, Sicke oder dergleichen. Das Eingreifelement kann in Umfangsrichtung auch kürzer als ein Halbkreis sein. Auch in der Umfangsrichtung kurze Eingreifelemente sind möglich. Die Eingreifelemente können in der Umfangsrichtung und/oder in axialer Richtung zueinander versetzt in der erfindungsgemäßen Verbindungsmuffe angeordnet sein.

Bei einer bevorzugten Ausführung der Erfindung steht das/stehen die Eingreifelemente nach innen über den Umfang des Hohlraums der Verbindungsmuffe über und ist/sind elastisch, insbesondere gummielastisch und/oder weisen ein Elastomer auf. Liegen die Wellenberge der Wellrohre innen am Umfang des Hohlraums der Verbindungsmuffe an oder weisen jedenfalls einen derart großen Durchmesser auf, dass sich die Wellenberge der Wellrohre in die elastischen Eingreifelemente einformen, greifen die Eingreifelemente in die Wellentäler der Wellrohre und halten sie axial in der Verbindungsmuffe. Zusätzlich wirkt eine Reibung zwischen den von außen gegen die Wellenberge drückenden elastischen Eingreifelementen und den Wellenbergen der Wellrohren, die die Wellrohre axial in der Verbindungsmuffe hält. Durch die Reibung der außen anliegenden elastischen Eingreifelemente lassen sich auch Glattrohre mit der erfindungsgemäßen Verbindungsmuffe verbinden.

Ein weiterer Vorteil der Erfindung ist, dass sich auch Wellrohre mit unterschiedlicher Geometrie ihrer Wellungen und durch eine radiale Höhe und die Elastizität der Eingreifelemente begrenzt unterschiedlichen Durchmessern oder ein Wellrohr oder ein Wellschlauch mit einem Glattrohr verbinden lassen.

Nach einer bevorzugten Ausgestaltungsvariante einer erfindungsgemäßen Verbindungsmuffe weisen die beiden Halbmuffen Kontaktflächen auf, die in der Teilungsebene aneinander anliegen. Mittels der Kontaktflächen wird eine definierte gegenseitige Anlage der beiden Halbmuffen der erfindungsgemäßen Verbindungsmuffe in dem miteinander verbundenen Zustand und damit die Stabilität sowie die Funktion der Verbindungsmuffe sichergestellt. Die Kontaktflächen sind insbesondere jeweils zwei einander in Bezug zur Längsachse gegenüberliegende Endflächen der Halbmuffen in der Axialebene oder eventuell auch in einer zu der Axialebene parallelen Ebene, die sich in der Längsrichtung der Halbmuffen beziehungsweise der Verbindungsmuffe, das heißt parallel zu der Längsachse erstrecken.

Entsprechend einer bevorzugten Ausgestaltungsvariante der erfindungsgemäßen Verbindungsmuffe sind die beiden Halbmuffen mit zumindest zwei Rastverbindungen miteinander verbunden. Rastverbindungen sind in vielfältigen Ausgestaltungen zur Verbindung zweier Bauteile, Gegenstände oder dergleichen bekannt und ermöglichen eine einfache, sichere, schnell wahlweise manuell oder automatisch herstellbare und dauerhafte sowie gegebenenfalls einfach, schnell und zerstörungsfrei lösbare Verbindung der Bauteile, Gegenstände oder dergleichen voneinander. Eine Anzahl und Anordnung der Rastverbindungen unterliegt der spiegelsymmetrischen Anordnung der Halbmuffen der erfindungsgemäßen Verbindungsmuffe. Eine Ausgestaltung der Erfindung sieht zwei oder ein ganzzahliges Vielfaches von zwei Rastverbindungen vor. Bevorzugt sind vier Rastverbindungen. Weist die Verbindungsmuffe zwei Rastverbindungen auf, sind diese vorzugsweise einander bezüglich der Längsachse einander gegenüber in einer Längsmitte der Verbindungsmuffe vorgesehen. Die beiden Rastverbindungen können allerdings auch außermittig, das heißt zwischen der Längsmitte und einem längsseitigen Ende der Verbindungsmuffe oder bezüglich einer die Längsachse in der Längsmitte der Verbindungsmuffe rechtwinklig schneidenden Querachse senkrecht zur Teilungsebene diametral gegenüber angeordnet sein. Vier oder mehr Rastverbindungen sind vorzugsweise einander bezüglich der Querachse diametral gegenüber angeordnet, wobei bei einem ungeraden Vielfachen von zwei Rastverbindungen, also beispielsweise sechs Rastverbindungen, ein Paar mittlerer Rastverbindungen insbesondere einander bezüglich der Längsachse gegenüber in der Längsmitte der Verbindungsmuffe angeordnet sind.

Gemäß einer bevorzugten Ausgestaltungsvariante der erfindungsgemäßen Verbindungsmuffe weist jede Rastverbindung einen Rasthaken und eine zu dem Rasthaken korrespondierende Rasttasche mit einer Hinterschneidung derart auf, dass in verbundenem Zustand ein Rasthaken einer Halbmuffe die Hinterschneidung in einer Rasttasche einer anderen Halbmuffe hintergreift und dadurch die beiden Halbmuffen aneinanderhält. Dabei ist die Rasttasche eine Aussparung, Hohlraum, Loch, Durchführung oder dergleichen in den Halbmuffen, in die in verbundenem Zustand ein zugeordneter Rasthaken der anderen Halbmuffe ragt und die Hinterschneidung in der Rasttasche hintergreift.

Eine Weiterbildung der Erfindung sieht vor, dass sich die Rasttaschen von einer Kontaktfläche durch eine Umfangswandung der Halbmuffe zu einer Außenumfangsfläche der Halbmuffe erstreckt und an der Kontaktfläche sowie an der Außenumfangsfläche offen ist. Mit den Kontaktflächen liegen die Halbmuffen in verbundenem Zustand aneinander an. Möglich ist auch ein kleiner Abstand der Kontaktflächen voneinander. Die Rasttasche weist also eine erste Öffnung in der Kontaktfläche und eine zweite Öffnung in der Außenumfangsfläche der Halbmuffe auf. In verbundenem Zustand der beiden Halbmuffen ragt der Rasthaken einer der beiden Halbmuffen durch die erste Öffnung der zugeordneten Rasttasche in der Kontaktfläche der anderen Halbmuffe.

Bei einer besonders bevorzugten Ausgestaltungsvariante einer erfindungsgemä-βen Verbindungsmuffe weist jede Rastverbindung einen Rastarm auf, von dem der Rasthaken der Rastverbindung in einer Richtung absteht und der in und entgegen der Richtung, in der der Rasthaken absteht, elastisch ist. Eine dem Rasthaken gegenüberliegende Seite des Rastarms ist als Anlagefläche für die zugeordnete Rasttasche der anderen Halbmuffe ausgebildet. Die Anlagefläche steht senkrecht oder auch schräg in einem spitzen Winkel zur Kontaktfläche der Halbmuffe. In verbundenem Zustand der beiden Halbmuffen liegt die einem Rasthaken zugeordnete Rasttasche mit einer Innenumfangsfläche der Rasttasche an der Anlagefläche des Rasthakens an, wodurch die Halbmuffen zueinander ausgerichtet werden.

Nach einer bevorzugten Ausgestaltungsvariante der erfindungsgemäßen Verbindungsmuffe ist zumindest ein Rasthaken einer der beiden Halbmuffen zu einem außer Eingriff bringen von der Hinterschneidung in der Rasttasche der anderen Halbmuffe wahlweise von der Außenumfangsfläche der einen Halbmuffe oder von der Außenumfangsfläche der anderen Halbmuffe durch die Rasttasche zugänglich.

Die erfindungsgemäße Verbindungsmuffe kann gerade, bogenförmig oder abgewinkelt sein. Die Längsachse der Verbindungsmuffe ist entsprechend gerade, bogenförmig oder abgewinkelt. Auch sind Ausführungen der Verbindungsmuffe zum Verbinden von mehr als zwei Wellrohren möglich. Diese weisen eine Verzweigung und mehr als zwei längsseitige Enden auf, in denen die Enden zu verbindender Wellrohre anordenbar sind. Vorzugsweise weist jedes längsseitige Ende ein nach innen stehendes Eingreifelement für den Eingriff in ein umlaufendes Wellental zwischen zwei umlaufenden Wellenbergen nach den Enden der Wellrohre auf. Die Längsachse und der Hohlraum der Verbindungsmuffe verzweigen sich in diesem Fall ebenfalls und der Hohlraum erstreckt sich zu jedem der längsseitigen Enden.

Derartige erfindungsgemäße Verbindungsmuffen sind beispielsweise T-förmig, Y-förmig, X-förmig oder kreuzförmig. Die Aufzählung ist beispielhaft und nicht abschließend.

Beispielsweise zu einem Anschluss eines Wellrohrs an ein Gehäuse oder dergleichen kann die Verbindungsmuffe als Anschluss mit beispielsweise einem Gewinde an einem längsseitigen Ende ausgebildet sein. In diesem Fall kann auch nur ein längsseitiges Ende zur Aufnahme eines Endes eines Wellrohrs ausgebildet sein. Ein zweigängiges Gewinde ermöglicht zwei identische Halbmuffen.

Vorzugsweise sind die beiden Halbmuffen einschließlich der Rasthaken und Rasttaschen jeweils einstückig und beispielsweise durch Spritzgießen aus Kunststoff hergestellt. Die beiden Halbmuffen sind identisch, die erfindungsgemäße Verbindungsmuffe ist also aus zwei identischen Halbmuffen zusammengesetzt oder zusammensetzbar.

Sämtliche in der Beschreibung genannten und/oder der Zeichnung dargestellten Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs aufweisen, sind möglich.

Die Erfindung wird nachfolgend anhand in der Zeichnung dargestellter Ausführungsbeispiele näher erläutert. Es zeigen:
- Figur 1: eine perspektivische Darstellung einer erfindungsgemäßen Verbindungsmuffe;
- Figur 2: eine Halbmuffe der Verbindungsmuffe aus Fig. 1;
- Figur 3: einen Querschnitt der Halbmuffe aus Figur 2;
- Figur 4: eine perspektivische Darstellung eines zweiten Ausführungsbeispiels einer erfindungsgemäßen Verbindungsmuffe;
- Figur 5: eine Halbmuffe der Verbindungsmuffe aus Figur 4;
- Figur 6: eine perspektivische Darstellung eines dritten Ausführungsbeispiels einer erfindungsgemäßen Verbindungsmuffe;
- Figur 7: eine Halbmuffe der Verbindungsmuffe aus Figur 6;
- Figur 8: eine perspektivische Darstellung eines vierten Ausführungsbeispiels einer erfindungsgemäßen Verbindungsmuffe;
- Figur 9: eine Halbmuffe der Verbindungsmuffe aus Figur 8;
- Figur 10: eine perspektivische Darstellung einer abgewinkelten Verbindungsmuffe gemäß der Erfindung;
- Figur 11: eine perspektivische Darstellung einer T-förmigen Verbindungsmuffe gemäß der Erfindung;
- Figur 12: eine perspektivische Darstellung einer Y-förmigen Verbindungsmuffe gemäß der Erfindung;
- Figur 13: eine perspektivische Darstellung einer kreuzförmigen Verbindungsmuffe gemäß der Erfindung; und
- Figur 14: eine perspektivische Darstellung einer Anschlussmuffe gemäß der Erfindung.

Gleiche Teile sind in den Figuren mit gleichen Bezugszahlen versehen.

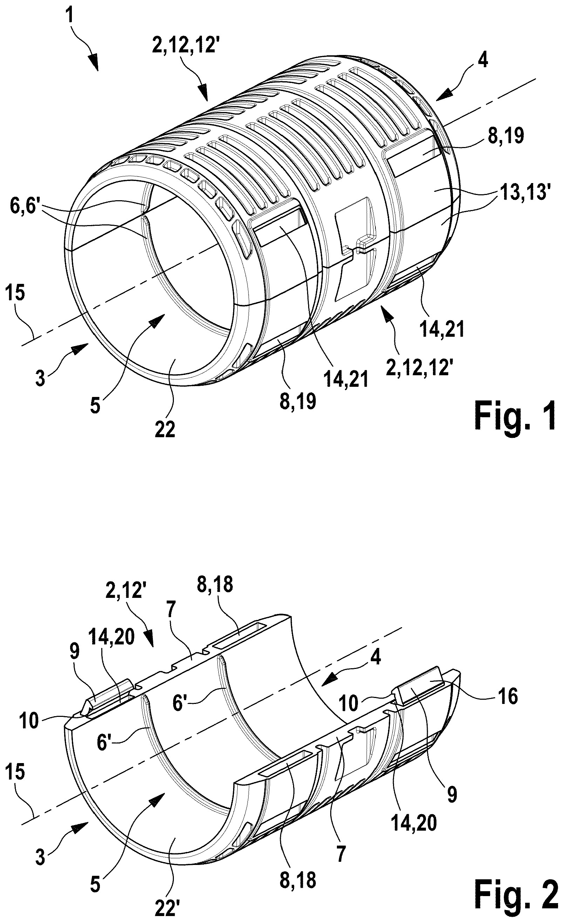

Figur 1 zeigt ein Ausführungsbeispiel einer erfindungsgemäßen Verbindungsmuffe 1, die zu einer Verbindung einander zugeordneter Enden zweier nicht dargestellter Wellrohre oder Wellschläuche vorgesehen ist. Die Verbindungsmuffe 1 ist rohrförmig, im Ausführungsbeispiel zylinderrohrförmig und weist eine Längsachse 15 auf. Die Verbindungsmuffe 1 weist entlang der Längsachse 15 ein erstes längsseitiges Ende 3 und ein zweites längsseitiges Ende 4 auf, die einen Abstand in Richtung der Längsachse 15 voneinander aufweisen, der einer Länge der Verbindungsmuffe 1 beziehungsweise einer größten Längserstreckung der Verbindungsmuffe 1 entlang der Längsachse 15 entspricht.

Die Verbindungsmuffe 1 weist in ihrem Inneren einen Hohlraum 5 auf, welcher sich entlang der Längsachse 15 erstreckt und sowohl zu dem ersten längsseitigen Ende 3 als auch dem zweiten längsseitigen Ende 4 hin offen ist. Ein Querschnitt des Hohlraums 5 korrespondiert in Form und Größe mit einem Querschnitt der zu verbindenden Wellrohre und ist für zylindrische Wellrohre insbesondere kreisförmig.

Eine Außenumfangsfläche 13 der Verbindungsmuffe 1 ist im Ausführungsbeispiel zylindrisch, was jedoch nicht wesentlich für die Erfindung ist. Die Außenumfangsfläche 13 der Verbindungsmuffe 1 kann eine grundsätzlich beliebige Form aufweisen. Nutförmige und aus Gründen der Übersichtlichkeit in der Zeichnung nicht mit einer Bezugszahl versehene Vertiefungen in der Außenumfangsfläche 13 der Verbindungsmuffe 1 sind aus spritzgießtechnischen Gründen und zur Materialeinsparung vorgesehen.

Ein Durchmesser des Hohlraums 5 ist so groß wie ein größter Außendurchmesser von Wellenbergen der zu verbindenden, nicht dargestellten Wellrohre.

Zur Verbindung der beiden nicht dargestellten Wellrohre werden Enden der beiden Wellrohre von beiden längsseitigen Enden 3, 4 aus bis ungefähr zu einer Längsmitte der Verbindungsmuffe 1 in deren Hohlraum 5 eingelegt. Um die Enden der Wellrohre axial im Hohlraum 5 der Verbindungsmuffe 1 zu halten, weist die Verbindungsmuffe 1 Eingreifelemente 6 auf, die im Hohlraum 5 nach innen stehen. In Figur 1 sind die Eingreifelemente 6 in Radialebenen der Verbindungsmuffe 1 umlaufende, kreisringförmige Rippen an einem Innenumfang der Verbindungsmuffe 1, die auch als Wulste oder Sicken aufgefasst werden können. Die Eingreifelemente 6 können auch andere Formen aufweisen, beispielsweise Nasen oder stiftförmig. Die Eingreifelemente 6 sind außerhalb und auf beiden Seiten einer Längsmitte der Verbindungsmuffe 1, das heißt auf beiden Seiten der Längsmitte zwischen der Längsmitte und den längsseitigen Enden 3, 4 im Hohlraum 5 der Verbindungsmuffe 1 angeordnet und greifen an jedem der beiden Wellrohre in ein umlaufendes Wellental zwischen zwei Wellenbergen des Wellrohres. Um die Wellrohre axial in der Verbindungsmuffe 1 zu halten, müssen die Enden beider Wellrohre von den längsseitigen Enden 3, 4 so tief in den Hohlraum 5 der Verbindungsmuffe 1 eingebracht sein, dass die Eingreifelemente 6 der Verbindungsmuffe 1 in ein Wellental der Wellrohre greifen.

Die Verbindungsmuffe 1 ist aus zwei identischen Halbmuffen 2 zusammengesetzt, die zueinander bezüglich einer Teilungsebene, die eine Axialebene der Verbindungsmuffe 1 ist, spiegelsymmetrisch gegenüber angeordnet sind. Figur 2 zeigt eine der beiden identischen Halbmuffen 2 der Verbindungsmuffe 1 in einer perspektivischen Darstellung. Die Halbmuffen 2 weisen eine Halbzylinderrohrform auf und bilden, wenn sie zusammengesetzt sind, die zylinderrohrförmige Verbindungsmuffe 1. Der zylindrische Hohlraum 5 der Verbindungsmuffe 1 wird von halbzylinderförmigen Innenseiten oder Hohlräumen 5' der zusammengesetzten Halbmuffen 2 gebildet.

Die beiden Halbmuffen 2 weisen jeweils Hälften der Eingreifelemente 6' auf, nämlich halbkreisringförmige Rippen an den hohlrunden Innenseiten der Halbmuffen 2, die zusammen die- im Ausführungsbeispiel kreisringförmigen - Eingreifelemente 6 bilden. Wie oben geschrieben ist die (Teil-)Kreisform nicht zwingend für die Eingreifelemente 6.

Die beiden Halbmuffen 2 der Verbindungsmuffe 1 sind mittels Rastverbindungen 8, 9, 10, 11 miteinander verbindbar oder verbunden. Sind die beiden Halbmuffen 2 der Verbindungsmuffe 1, wie in Figur 1 gezeigt, miteinander verbunden, liegen Kontaktflächen 7, 7' der Halbmuffen 2 in der Teilungsebene aneinander an. Die Kontaktflächen 7, 7` sind im Ausführungsbeispiel streifenförmige, einander bezüglich der Längsachse gegenüberliegende Flächen an der Teilungseben der Verbindungsmuffe 1, die sich an Längsrändern der Halbmuffen 2 parallel zu der Längsachse 5 von einem zum anderen längsseitigen Ende 3, 4 der Verbindungsmuffe 1 erstrecken.

Jede Halbmuffe 2 weist als Teil der Rastverbindungen 8, 9, 10, 11 zwei Rasttaschen 8 und zwei Rasthaken 10 auf, wobei die Rasthaken 10 einer Halbmuffe 2 von den Kontaktflächen 7, 7' abstehen und in jeweils eine zugeordnete Rasttasche 8 der anderen Halbmuffe 2 greifen und dort eine Hinterschneidung 11 hintergreifen und dadurch die beiden Halbmuffen 2 miteinander verbinden. Die Hinterschneidungen 11 sind als Stufen in den Rasttaschen 8 ausgebildet.

Die Rasthaken 10 sind an freien Enden von Rastarmen 9 angeordnet und stehen in einer Richtung - im Ausführungsbeispiel nach innen, das heißt in Richtung der Längsachse 15 - von dem zugehörigen Rastarm 9 ab. Die Rastarme 9 stehen senkrecht oder im Ausführungsbeispiel schräg nach innen von den Kontaktflächen 7, 7' der Halbmuffen 2 ab und sind elastisch biegbar, um sie in und außer Eingriff von den Hinterschneidungen 11 in den zugeordneten Rasttaschen 8 bringen zu können.

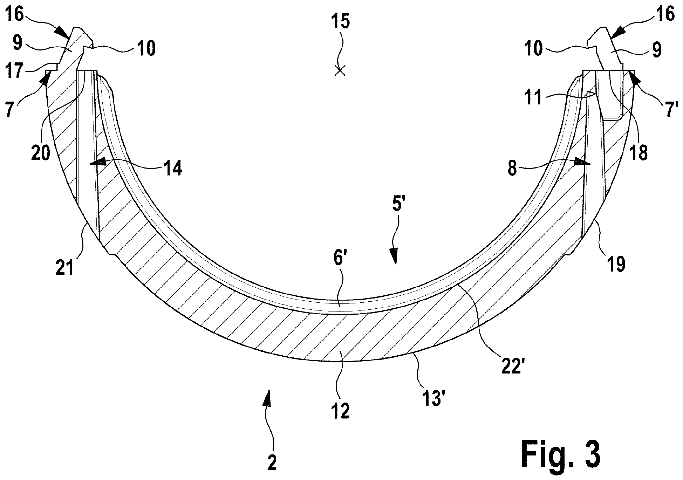

Die Figur 3 zeigt einen Querschnitt der Halbmuffe 2 aus Figur 2 in einer zu der Längsachse 15 senkrechten Ebene durch einen Rasthaken 10 und durch zwei Rasttaschen 8. Dadurch dass die Rastarme 9 schräg nach innen von den Kontaktflächen 7, 7' abstehen, richten sie die Halbmuffen 2 beim Zusammensetzen zueinander aus.

An einem Fuß am Übergang in die Kontaktflächen 7, 7' weisen die Rastarme 9 in Längsrichtung der Rastarme 9 kurze Anlageflächen 16 (Figur 3) für die jeweils zugeordnete Rasttasche 8 auf. Die Anlageflächen 16 sind im Ausführungsbeispiel schräg zu den Kontaktflächen 7, 7' und an der Längsachse 15 abgewandten Außenseiten der Rastarme 9 angeordnet, wobei die Erfindung andere Ausrichtungen und/oder Anordnungen der Anlageflächen 16 nicht ausschließt. Die Anlageflächen 16 sind in Bezug auf die Rasttaschen 8 so angeordnet, dass bei zu der Verbindungsmuffe 1 verbundenen Halbmuffen 2 die Anlageflächen 16 einander in Bezug zur Längsachse 15 gegenüberliegender Rastarme 9, die in die jeweils zugeordnete Rasttasche 8 ragen, - im Ausführungsbeispiel außen, das heißt auf einer der Längsachse 15 abgewandten Seite - an einem Innenumfang der jeweils zugeordneten Rasttasche 8 anliegen. Dadurch richten die Anlageflächen 16 an den Rastarmen 9 der Rasthaken 10 die beiden Halbmuffen 2 gleichachsig zueinander aus.

Die Halbmuffen 2 weisen zwei Rastarme 9 mit Rasthaken 10 und zwei Rasttaschen 8 auf. Die Rastarme 9 einander bezüglich der nicht gezeichneten Querachse, die die Längsachse 15 in der Längsmitte der Halbmuffen 2 und der Verbindungsmuffe 1 senkrecht und senkrecht zur Teilungsebene schneidet, einander diametral gegenüber und die Rasttaschen 8 einander ebenfalls bezügliche dieser Querachse diametral gegenüber angeordnet sind. Dabei ist jeweils ein Rastarm 9 einer Rasttasche 8 bezüglich der Längsachse 15 gegenüber angeordnet. Durch Anlage der Rastarme 9 an längsseitigen Enden in den Rasttaschen 8 richten die Rastarme 9 die Halbmuffen 2 in der Längsrichtung zueinander aus.

Bei einem Zusammensetzen der beiden Halbmuffen 2 werden die beiden Halbmufffen 2 mit ihren Innenseiten einander zugewandt einander senkrecht zur Teilungsebene genähert, bis ihre Kontaktflächen 7, 7' aneinander anliegen. Dabei gelangen die Rastarme 9 der einen Halbmuffe 2 in die Rasttaschen 8 der anderen Halbmuffe 2 und richten die Halbmuffen 2 wie vorstehend beschrieben gleichachsig und in der Längsrichtung zueinander aus. Die Rasthaken 10 an den freien Enden der Rastarme 9 rasten an den Hinterschneidungen 11 in den Rasttaschen 8 ein und hintergreifen die Hinterschneidungen 11 derart, dass die Halbmuffen 2 mit ihren Kontaktfkächen 7, 7' aneinander anliegend verbunden sind. Möglich ist auch eine Ausführung der Verbindungsmuffe 1 mit etwas Abstand der Kontaktflächen 7, 7' voneinander bei verbundenen Halbmuffen 2.

Zum Lösen der beiden Halbmuffen 2 voneinander müssen die Rasthaken 10 außer Eingriff von den Hinterschneidungen 11 in den Rasttaschen 8 gebracht werden. Dazu wird beispielsweise ein Schraubendreher oder dergleichen Gegenstand von den Außenumfangsflächen 13' der Halbmuffen 2 durch die zweiten Öffnungen 19 der Rasttaschen 8 in die Rasttaschen 8 eingebracht bis zu einer Anlage des Schraubendrehers oder dergleichen an den der Längsachse 15 der Innenseiten der Rastarme 9 der Rasthaken 10. Mit dem Schraubendreher lassen sich die Rastarme 9 elastisch nach außen, das heißt von der Längsachse 15 wegdrücken, bis die Rasthaken 10 außer Eingriff von den Hinterschneidungen 11 in den Rasttaschen 8 gelangen, wonach die Halbmuffen 2 voneinander entfernt werden können.

Eine zweite Möglichkeit zum Lösen der Halbmuffen 2 voneinander ist, einen Schraubendreher oder dergleichen Gegenstand durch eine Entrastungsausnehmung 14 zur Innenseite des Rastarms 9 zu führen und den Rastarm 9 elastisch nach außen, das heißt weg von der Längsachse 15 der Verbindungsmuffe 1 und der Halbmuffe 2 zu drücken, bis der Rasthaken 10 außer Eingriff von der Hinterschneidung 11 in der Rasttasche 8 tritt. Die Entrastungsausnehmung 14 führt - wie auch die Rasttasche 8 - von der Außenumfangsfläche 13, 13' zur Kontaktfläche 7, 7' der Halbmuffe 2, wo die Entrastungsausnehmung 14 mit einer ersten Öffnung 20 auf der Innenseite des Rastarms 9 mündet. Der Schraubendreher oder dergleichen Gegenstand wird durch eine zweite Öffnung 21 der Entrastungsausnehmung 14 an der Außenumfangsfläche 13, 13' der Halbmuffe 2 beziehungsweise der Verbindungsmuffe 1 eingeführt.

Zum Entrasten des Rasthakens 10 wird der Schraubendreher oder dergleichen Gegenstand durch die Entrastungsausnehmung 14 der Halbmuffe 2, die den Rastarm 9 mit dem Rasthaken 10 aufweist, oder durch die Rasttasche 8 der anderen Halbmuffe 2 eingeführt.

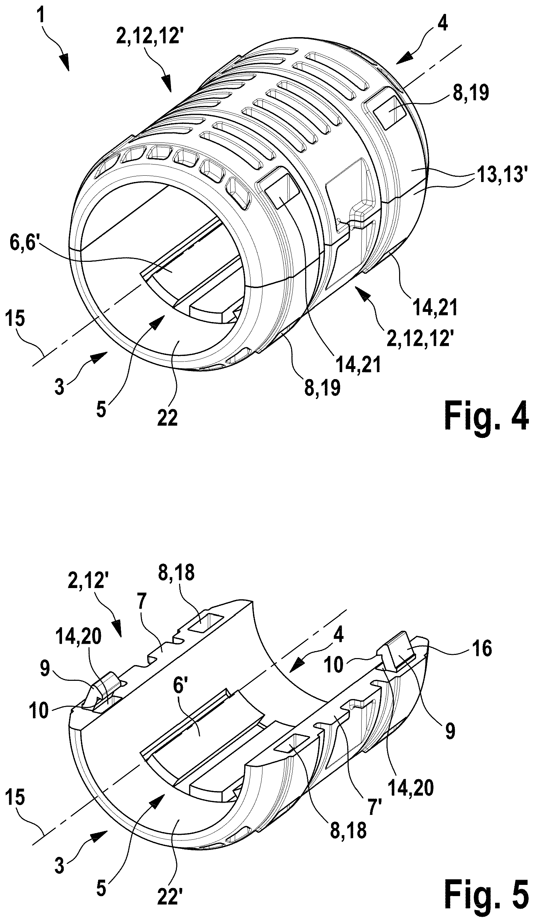

Die in Figur 4 dargestellte, erfindungsgemäße Verbindungsmuffe 1 und ihre in Figur 5 dargestellte Halbmuffe 2 weisen anstelle der Rippe ein streifenförmiges, gummielastisches Element als Eingreifelement 6 auf, das in einer ebenfalls streifenförmigen Vertiefung im Umfang des Hohlraums 5, 5' angeordnet ist. Das Eingreifelement 6 und die Vertiefung verlaufen in der Längsrichtung der Verbindungsmuffe 1 und erstrecken sich in beiden Richtungen über die Längsmitte der Verbindungsmuffe 1 hinweg. Das elastische Eingreifelement 6 ist höher als die Vertiefung, in der es angeordnet ist, tief ist derart, dass das Eingreifelement 6 nach innen aus der Vertiefung vor- und in den Hohlraum 5, 5' nach innen steht. Das Eingreifelement 6 ist über eine Umfangsfläche des Hohlraums 5, 5' erhaben.

Bei geschlossener Verbindungsmuffe 1 liegt das Eingreifelement 6 außen an den Wellenbergen der mit der Verbindungsmuffe 1 verbundenen, nicht dargestellten Wellrohre an und drückt mit einer Kraft gegen die Wellenberge derart, dass die Wellrohre durch Reibung mit dem elastischen Eingreifelement 6 axial in der Verbindungsmuffe 1 gehalten sind.

Außerdem formt sich das elastische Eingreifelement 6 in die Wellentäler der Wellrohre zwischen den Wellenbergen ein derart, dass die Wellrohre durch Formschluss mit dem Eingreifelement 6 axial in der Verbindungsmuffe 1 gehalten sind.

Mit den elastischen und nach innen in den Hohlraum 5, 5' vorstehenden Eingreifelementen 6 lassen sich auch Glattrohre verbinden.

Es weist jede Halbmuffe 2 ein elastisches Eingreifelement 6 auf, die Verbindungsmuffe 1 weist zwei elastische Eingreifelemente 6 einander gegenüber in ihrem Hohlraum 5, 5' auf, die in den Hohlraum 5, 5' nach innen stehen.

Die elastischen Eingreifelemente 6 können lose in den Vertiefungen einliegen, vorzugsweise sind sie beispielsweise durch Kleben, Schweißen, Einklipsen oder dergleichen befestigt. Möglich ist beispielsweise auch ein Einspritzen der elastischen Eingreifelemente in die Vertiefungen, eventuell auch ohne Vertiefung, in die Hohlräume 5' der Halbmuffen 2 der Verbindungsmuffe 1.

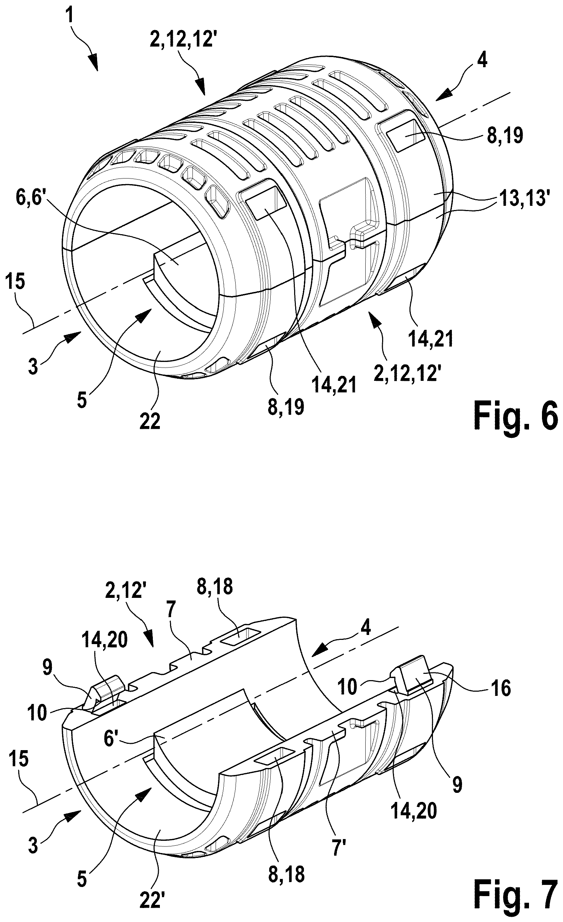

Bei dem in Figuren 6 und 7 dargestellten Ausführungsbeispiel einer erfindungsgemäßen Verbindungsmuffe 1 ist das Eingreifelement 6 wie in Figuren 4 und 5 elastisch, insbesondere ein gummielastisches Elastomer. Es unterscheidet sich durch seine Form von dem Eingreifelement 6 aus Figuren 4 und 5: in Figuren 6 und 7 sind das elastische Eingreifelement 6 und die Vertiefung, in der es angeordnet ist, rechteckig.

Wie in Figuren 4 und 5 ist auch in Figuren 6 und 7 das Eingreifelement 6 höher als die Vertiefung, in der es angeordnet ist derart, dass es nach innen in den Hohlraum 5, 5' der Verbindungsmuffe 1 beziehungsweise ihrer Halbmuffen 2 vorsteht und bei geschlossener Verbindungsmuffe 1 mit einer Druckkraft an den Wellenbergen der verbundenen Wellrohre im Hohlraum 5, 5' der Verbindungsmuffe 1 anliegt und elastisch in die Wellentäler der Wellrohre greift.

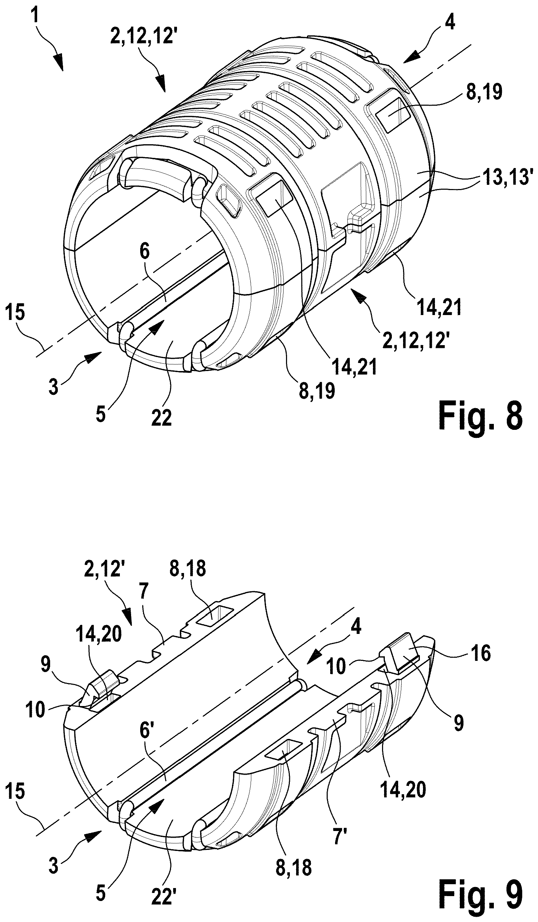

Bei dem in Figuren 8 und 9 dargestellten Ausführungsbeispiel der Erfindung weisen die Halbmuffen 2 achsparallele Nuten 25 mit halbkreisförmigen Querschnitten auf, in denen O-Ringe, also Dichtringe aus einem Elastomer als Eingreifelemente 6 angeordnet sind. Wie in Figuren 4 bis 7 liegen die die Eingreifelemente 6 bildenden, gummielastischen Schnüre bei geschlossener Verbindungsmuffe 1 mit einer Drucckraft an den Wellenbergen der in der Verbindungsmuffe 1 einliegenden, nicht dargestellten Wellrohre ein und formen sich elastisch in die Wellentäler der Wellrohre derart, dass die Wellrohre durch Reibung der elastischen Eingreifelemente 6 an den Wellenbergen und den Eingriff in die Wellentäler der Wellrohre axial in der Verbindungsmuffe 1 gehalten sind.

Möglich sind beispielsweise auch Dichtringe oder Elastomerringe mit anderem, beispielsweise ovalem, quadratischem oder rechteckigem Querschnitt oder Quadringe als Eingreifelemente 6 (nicht dargestellt) und/oder in umlaufenden Nuten angeordnete O-Ringe oder andere Elastomerringe als Eingreifelemente 6 (nicht dargestellt).

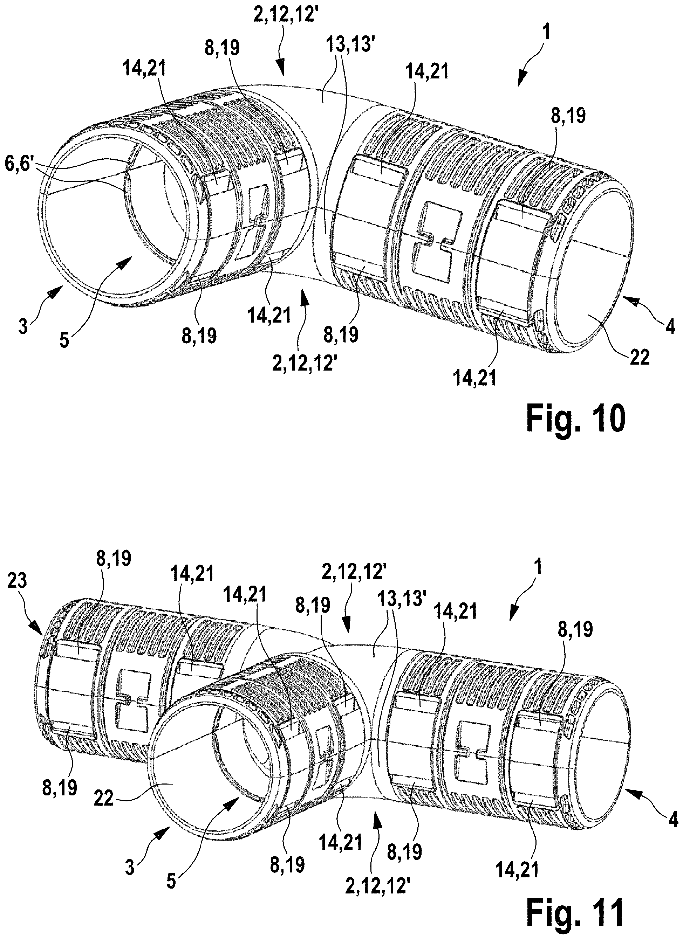

Die in Figur 10 dargestellte, erfindungsgemäße Verbindungsmuffe 1 ist - im Ausführungsbeispiel um 90° - abgewinkelt, wodurch sie eine Verbindung der Enden zweier Wellrohre in diesem Winkel ermöglicht. Im Übrigen ist sie gleich ausgebildet wie die vorstehend erläuterte und in Figur 1 bis 3 dargestellte Verbindungsmuffen.

Ergänzend werden zur Erläuterung der Figur 10 und der Figuren 11 bis 14 die vorstehenden Erläuterungen der Figuren 1 bis 9 in Bezug genommen.

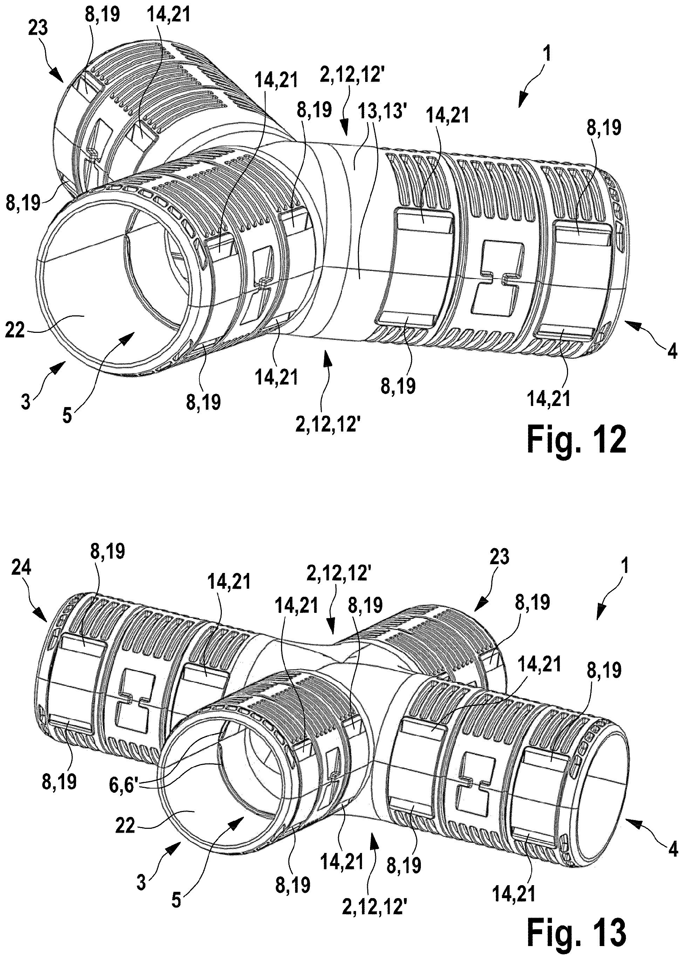

Die erfindungsgemäßen Verbindungsmuffen 1 aus Figuren 11 und 12 ermöglichen ein Verbinden der Enden von drei Wellrohren, Sie weisen eine Verzweigung und jeweils drei längsseitige Enden 3, 4, 23 auf, die zur Aufnahme der Enden jeweils eines der Wellrohre ausgebildet sind. Wie in Figuren 1 bis 3 stehen umlaufende, kreisringförmige Rippen als Eingreifelemente 6 oder wie in Figuren 4 bis 9 elastische Eingreifelemente 6 mit Abstand von den längsseitigen Enden 3, 4, 23 an einem Innenumfang der Verbindungsmuffen 1 nach innen ab.

Die Verbindungsmuffe 1 aus Figur 11 weist einen rechtwinkligen Abzweig auf, weswegen diese Verbindungsmuffe 1 als T-förmig aufgefasst werden kann. Bei der Verbindungsmuffe 1 aus Figur 12 ist der Abzweig spitzwinklig, weswegen die Verbindungsmuffe 1 als Y-förmig aufgefasst werden kann.

Die in Figur 13 dargestellte, erfindungsgemäße Verbindungsmuffe 1 ermöglicht eine Verbindung der Enden von vier Wellrohren. Die Verbindungsmuffe 1 ist kreuzförmig und weist vier längsseitige Enden 3, 4, 23, 24 auf, in denen die Enden der vier Wellrohre angeordnet werden können.

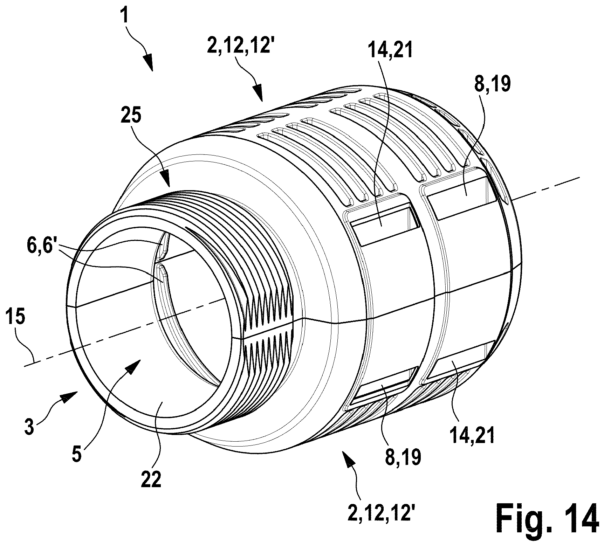

In Figur 14 ist nur ein längsseitiges Ende 3 der dort dargestellten, erfindungsgemä-βen Verbindungsmuffe 1 zur Aufnahme eines Endes eines Wellrohrs vorgesehen. An einem anderen, im Ausführungsbeispiel gegenüberliegenden längsseitigen Ende 4 ist diese Verbindungsmuffe 1 zu einer Befestigung an beispielsweise einem nicht dargestellten Gehäuse oder dergleichen vorgesehen. Die Verbindungsmuffe 1 weist dazu im Anschluss an das längsseitige Ende 4 ein Außengewinde 25 auf. Das Außengewinde 25 kann eingängig sein. Im Ausführungsbeispiel ist es zweigängig, was eine Verbindungsmuffe 1 ermöglicht, die aus zwei identischen Halbmuffen 2 zusammengesetzt ist.

Alle dargestellten, erfindungsgemäßen Verbindungsmuffen 1 sind aus zwei identischen Halbmuffen 2 zusammengesetzt, die in einer ebenen Anlagefläche 16 als Teilungsebene aneinander anliegen. Wie oben zu Figuren 1 bis 3 beschrieben, sind die Halbmuffen 2 mit Rastarmen, die Rasthaken an ihren Enden aufweisen, die jeweils eine Hinterschneidung in einer Rasttasche der jeweils anderen Halbmuffe hintergreifen, miteinander verbunden.

## Patentansprüche

1. Verbindungsmuffe (1) zur Verbindung von zwei Wellrohren,
wobei die Verbindungsmuffe (1) eine Längsachse (15), ein erstes längsseitiges Ende (3), ein zweites längsseitiges Ende (4) und einen Hohlraum (5) im Innern der Verbindungsmuffe (1) aufweist,
wobei das erste längsseitige Ende (3) und das zweite längsseitige Ende (4) einen Abstand in Richtung der Längsachse (15) voneinander aufweisen, sich der Hohlraum (5) von dem ersten längsseitigen Ende (3) zu dem zweiten längsseitigen Ende (4) erstreckt und an den längsseitigen Enden (3, 4) zur Aufnahme jeweils eines Endes eines der zu verbindenden Wellrohre offen ist,
wobei die Verbindungsmuffe (1) an einer Axialebene der Längsachse (15) als Teilungsebene in zwei identische, einander bezüglich der Teilungsebene spiegelsymmetrisch gegenüber angeordnete und miteinander verbundene Halbmuffen (2) geteilt ist,
und wobei jede der Halbmuffen (2) mindestens ein Eingreifelement (6) für jeweils eines der beiden zu verbindenden Wellrohre aufweist, das in dem Hohlraum (5) nach innen steht und das zwischen zwei Wellen des Wellrohres greift, wenn das Wellrohr in dem Hohlraum (15) angeordnet ist und Wellenberge des Wellrohrs innen an einem Umfang des Hohlraums (5) anliegen.

2. Verbindungsmuffe nach Anspruch 1, **dadurch gekennzeichnet, dass** das Eingreifelement (6) eine nach innen in den Hohlraum (5) stehende Erhebung aufweist.

3. Verbindungsmuffe nach Anspruch 1 oder 2, **dadurch gekennzeichnet, dass** das Eingreifelement (6) elastisch, insbesondere gummielastisch ist und/oder ein Elastomer aufweist.

4. Verbindungsmuffe nach einem oder mehreren der Ansprüche 1 bis 3, **dadurch gekennzeichnet, dass** die beiden Halbmuffen (2) Kontaktflächen (7, 7') aufweisen, die in der Teilungsebene aneinander anliegen.

5. Verbindungsmuffe nach einem oder mehreren der Ansprüche 1 bis 4, **dadurch gekennzeichnet, dass** die Halbmuffen (2) mit zumindest zwei Rastverbindungen (8, 9, 10, 11) miteinander verbunden sind.

6. Verbindungsmuffe nach Anspruch 5, **dadurch gekennzeichnet, dass** die Rastverbindungen jeweils einen Rasthaken (10) und wenigstens eine zu dem Rasthaken (10) korrespondierende Rasttasche (8) mit einer Hinterschneidung (11) derart aufweisen, dass in verbundenem Zustand ein Rasthaken (10) einer Halbmuffe (2) die Hinterschneidung (11) in einer Rasttasche (8) einer anderen Halbmuffe (2) hintergreift und dadurch die beiden Halbmuffen (2) aneinander hält.

7. Verbindungsmuffe nach Anspruch 4 und 6, **dadurch gekennzeichnet, dass** sich die Rasttasche (8) von einer der Kontaktflächen (7, 7') durch eine Umfangswandung (12') der Halbmuffe (2) zu einer Außenumfangsfläche (13') der Halbmuffe (2) erstreckt und an der Kontaktfläche (7, 7') sowie an der Außenumfangsfläche (13') offen ist.

8. Verbindungsmuffe nach Anspruch 7, **dadurch gekennzeichnet, dass** der Rasthaken (10) zu einem außer Eingriff bringen von der Hinterschneidung (11) von der Außenumfangsfläche (13') durch die Rasttasche (8) der Halbmuffe (2), die den Rasthaken (10) aufweist, und/oder von der Außenumfangsfläche (13') durch die Rasttasche (8) der anderen Halbmuffe (2) zugänglich ist.

9. Verbindungsmuffe nach einem oder mehreren der Ansprüche 5 bis 7, **dadurch gekennzeichnet, dass** jede der Rastverbindungen (8, 9, 10, 11) einen Rastarm (9) aufweist, von dem der Rasthaken (10) der Rastverbindung (8, 9, 10, 11) in einer Richtung absteht und der in und entgegen der Richtung, in der der Rasthaken (10) absteht, elastisch ist.

10. Verbindungsmuffe nach einem oder mehreren der Ansprüche 6 bis 9, **dadurch gekennzeichnet, dass** der Rastarm (9) eine Anlagefläche (16) für eine Innenumfangsfläche der zugeordneten Rasttasche (8) aufweist, an der die Innenumfangsfläche der zugeordneten Rasttasche (8) anliegt derart, dass die beiden Halbmuffen (2) gleichachsig oder in einer zu der Längsachse (15) parallelen Längsrichtung zueinander ausgerichtet sind.

11. Verbindungsmuffe nach einem oder mehreren der Ansprüche 6 bis 10, **dadurch gekennzeichnet, dass** ein Rasthaken (10) einer der beiden Halbmuffen (2) zu einem außer Eingriff bringen von der Hinterschneidung (11) in der zugeordneten Rasttasche (8) der anderen Halbmuffe (2) von der Außenumfangsfläche (13') der anderen Halbmuffe (2) durch die Rasttasche (8) der anderen Halbmuffe (2) zugänglich ist.

12. Verbindungsmuffe nach einem oder mehreren der Ansprüche 6 oder 11, **dadurch gekennzeichnet, dass** eine der beiden Halbmuffen (2) der Verbindungsmuffe (1) eine Entrastungsausnehmung (14) zu einem außer Eingriff bringen des Rasthakens (9) der Halbmuffe (2) von der Hinterschneidung (11) der korrespondierenden Rasttasche (8) der anderen Halbmuffe (2) aufweist, die sich von der Außenumfangsfläche (13') der einen Halbmuffe (2) durch die Umfangswandung (12') der Halbmuffe (2) zu einer der Kontaktflächen (7, 7') der Halbmuffe (2) erstreckt und in der Kontaktfläche (7, 7') auf der Seite des Rastarms (9) mündet, auf der sich der Rasthaken (10) befindet.

13. Verbindungsmuffe nach einem oder mehreren der vorhergehenden Ansprüche, **dadurch gekennzeichnet, dass** die Verbindungsmuffe (1) abgewinkelt ist oder eine Krümmung aufweist.

14. Verbindungsmuffe nach einem oder mehreren der vorhergehenden Ansprüche, **dadurch gekennzeichnet, dass** die Verbindungsmuffe (1) mehr als zwei längsseitige Enden (3, 4, 23, 24) aufweist, die zur Aufnahme jeweils eines Endes eines Wellrohrs offen sind, und dass sich der Hohlraum (5) der Verbindungsmuffe (1) verzweigt und zu den mehr als zwei längsseitigen Enden (3, 4, 23, 24) erstreckt.

15. Verbindungsmuffe nach einem oder mehreren der vorhergehenden Ansprüche, **gekennzeichnet durch** eine einstückige Ausbildung der Halbmuffen (2).

16. Verbindungsmuffe nach einem oder mehreren der vorhergehenden Ansprüche, **gekennzeichnet dadurch, dass** die Halbmuffen (2) Spritzgussteile sind.
